# EUROPÄISCHE PATENTSCHRIFT

(11) **EP 3 619 406 B1**
(45) Veröffentlichungstag und Bekanntmachung des Hinweises auf die Patenterteilung: **05.08.2020**
(21) Anmeldenummer: 18812161.0
(22) Anmeldetag: 03.12.2018
(51) Int. Cl.: F01N 3/08

(54) **VERWERTUNG VON SCHADSTOFFEN AUS VERBRENNUNGSMOTOREN**
RECOVERY OF POLLUTANTS FROM INTERNAL COMBUSTION ENGINES
RÉCUPÉRATION DES POLLUANTS D'UN MOTEUR À COMBUSTION INTERNE

(30) Priorität: 18.01.2018 DE 102018000378
(43) Veröffentlichungstag der Anmeldung: 11.03.2020
(73) Patentinhaber: Audi AG, 85045 Ingolstadt (DE)
(72) Erfinder: MÜLLER-HELLWIG, Simone, 85051 Ingolstadt (DE); SEIFERT, Hagen, 93049 Regensburg (DE); HEIGL, Roland, 85117 Eitensheim (DE); KRAJETE, Alexander, 4061 Pasching (AT); SEIFERT, Arne, 1120 Wien (AT)
(86) Internationale Anmeldenummer: PCT/EP2018/083337
(87) Internationale Veröffentlichungsnummer: WO 2019/141425

(56) Entgegenhaltungen:
- EP-A1- 1 625 884
- DE-A1- 10 049 119
- US-A1- 2016 312 675

## Beschreibung

Die Erfindung betrifft die Verwertung von in Verbrennungsmotoren gebildeten Stickoxiden. Es werden ein System und ein Verfahren vorgestellt, mit denen die Stickoxide zur Herstellung von flüssigen oder festen Chemikalien genutzt werden können.

Verbrennungskraftmotoren verbrennen Kraftstoff unter Luftzufuhr zu Abgasen. Abgasnormen legen die Obergrenzen für den Ausstoß von Schadstoffen (beispielsweise NOₓ) fest. Die Grenzwerte unterliegen einer zunehmenden Verschärfung. Zur Verringerung von Schadstoffemissionen werden aktuell verschiedene Effizienzmaßnahmen und Leichtbau eingesetzt, die die Erzeugung der Schadstoffe minimieren sollen. Außerdem wird durch eine effiziente Abgasnachbehandlung die Emission von Schadstoffen reduziert.

Eine Maßnahme zur Verringerung von Schadstoffemissionen ist eine adsorptive Abgasnachbehandlung, die beispielsweise NOₓ aus dem Abgasstrom entfernen kann. Dabei wird das Abgas durch eine Einheit mit Adsorptionsmaterial geleitet. Die Emissionen werden bestenfalls zu 100% zurückgehalten und reichern sich auf dem Material an. Ist die Adsorptionskapazität des Filtermaterials erschöpft, wird dieses ausgetauscht oder regeneriert.

Beispielsweise ist aus DE 10 2012 208 072 A1 eine Vorrichtung zum Reinigen von Fahrzeugabgasen mit einem Partikelfilterelement bekannt. Das Filterelement ist auswechselbar und wird bei einer ausreichenden Beladung ausgetauscht.

Aus der DE 11 2006 001 296 T5 ist eine Auspufflinie für Brennkraftmotoren bekannt. Die Auspufflinie umfasst eine Filtervorrichtung, die Stickoxide in einer Stickoxidfalle sammelt. Wenn die Kapazitätsgrenze der Stickoxidfalle erreicht ist, wird sie regeneriert. Dazu wird der Motor mit fettem Gemisch betrieben und das erzeugte Abgas wird mit Stickoxiden aus der Stickoxidfalle zu Stickstoff und Kohlendioxid umgesetzt.

Die EP 2 476 473 A1 betrifft ein Filtermodul zur Adsorption von in der Umgebungsluft befindlichen Partikeln und/oder zur Umsetzung von gasförmigen Luftschadstoffen, die z.B. beim Betrieb von Kraftfahrzeugen auf Straßen oder Schienen oder bei anderen Verbrennungsvorgängen entstehen. Das Filtermodul filtert Schadstoffe wie Feinstaub, Stickoxide oder leichtflüchtige Kohlenwasserstoffe aus der Umgebungsluft und wandelt diese katalytisch in weniger schädliche Verbindungen um. Das verwendete Filtermaterial ist auswechselbar.

Die EP 1 625 884 A1 offenbart ein Verfahren zum Reduzieren von NOx-Emissionen von Fahrzeugen, umfassend einen Schritt (a), das Oxidieren von NOx, um Stickstoffdioxid zu bilden, und einen Schritt (b), das Reagierenlassen des Stickstoffdioxides mit einem Erdalkalimetall, um ein Erdalkalimetalnitrat zu bilden, welches eine Mischung aus Calcium und Magnesium beinhaltet.

Die US 2016/312675 A1 offenbart einen Prozess zum Wiederherstellen der Leistung einer Komponente eines Nachbehandlungssystems für Abgase.

Die DE 100 49 119 A1 offenbart eine Abgasreinigungsanlage zur Reinigung des Abgases eines Kraftfahrzeug-Verbrennungsmotors, mit einem Stickoxid-Speicherkatalysator und einer diesem vorgeschalteten Schwefelfalle.

Bei den beschriebenen Verfahren entsteht entweder Abfall in Form von verbrauchtem Filtermaterial oder es werden bei der Regeneration des Filtermaterials die adsorbierten Schadstoffe wieder freigesetzt bzw. unter Bildung anderer gasförmiger Schadstoffe umgesetzt.

Vor diesem Hintergrund hat sich die Erfindung die Aufgabe gestellt, ein Verfahren und ein System zur Verringerung der Emissionen von in Verbrennungsmotoren gebildeten Stickoxiden zur Verfügung zu stellen, welche die beschriebenen Nachteile vermeiden.

Die Aufgabe wird erfindungsgemäß gelöst durch ein Verfahren mit den Merkmalen des Anspruchs 1 und ein System mit den Merkmalen des Anspruchs 4. Ausgestaltungen ergeben sich aus den abhängigen Ansprüchen.

Ein Merkmal der Erfindung ist es, dass in Verbrennungsmotoren gebildete Stickoxide (NOₓ), die durch Adsorption auf einem Adsorbermaterial eines NOₓ-Speichers dem Abgas entnommen wurden und sich in dem NOₓ-Speicher angereichert haben, nach Entnahme des beladenen NOₓ-Speichers aus diesem desorbiert und einem Umwandlungsprozess zugeführt werden. Dieser Umwandlungsprozess nutzt von dem Adsorbermaterial desorbierte Stickoxide zur Herstellung von flüssigen oder festen stickstoffhaltigen Verbindungen, beispielsweise Düngemitteln. Das Adsorbermaterial kann nach der Desorption der Stickoxide (Regeneration des Adsorbermaterials) wieder zur Adsorption von Stickoxiden eingesetzt werden.

Gegenstand der Erfindung ist ein Verfahren zur Verwertung von in einem Verbrennungsmotor gebildeten Stickoxiden.

Das erfindungsgemäße Verfahren umfasst als ersten Schritt die Adsorption von Stickoxiden (NOₓ) aus einem Abgasstrom des Verbrennungsmotors in einer Adsorbereinheit. Hierzu wird während des Betriebs des Verbrennungsmotors ein Abgasstrom des Verbrennungsmotors durch eine Adsorbereinheit geleitet. In der Adsorbereinheit werden im Abgasstrom enthaltene Stickoxide (NOₓ) adsorbiert. Die Adsorbereinheit wird dadurch mit NOₓ beaufschlagt. In einer Ausführungsform des Verfahrens wird dieser Schritt solange durchgeführt, bis die Kapazitätsgrenze der Stickoxid-Aufnahme der Adsorbereinheit erreicht ist.

Erfindungsgemäß enthält die Adsorbereinheit ein Adsorbermaterial, das Stickoxide binden kann, und die Stickoxide (NOₓ) werden von dem in der Adsorbereinheit angeordneten Adsorbermaterial adsorbiert.

Das Adsorbermaterial umfasst mindestens einen Zeolithen. Zeolithe, die Stickoxide adsorbieren können, sind dem Fachmann im Prinzip bekannt. Beispiele umfassen ZSM-5, Zeolith Y und Mordenit.

Nach Beendigung des ersten Schritts des erfindungsgemäßen Verfahrens, insbesondere nach Erreichen der Kapazitätsgrenze der Adsorbereinheit, wird die mit Stickoxiden (NOₓ) beladene Adsorbereinheit aus dem Abgasstrom entfernt. Die in der Adsorbereinheit gebundenen adsorbierten Stickoxide (NOₓ) werden anschließend desorbiert und einer Umsetzung der Stickoxide (NOₓ) zu flüssigen oder festen stickstoffhaltigen Verbindungen zugeführt.

In einer Ausführungsform des Verfahrens wird die mit Stickoxiden (NOₓ) beladene Adsorbereinheit gegen eine unbeladene Adsorbereinheit ausgetauscht. In einer anderen Ausführungsform wird ein mit Stickoxiden (NOₓ) beladenes Adsorbermaterial in der Adsorbereinheit gegen ein unbeladenes Adsorbermaterial ausgetauscht. In einer weiteren Ausführungsform wird das mit NOₓ beladene Adsorbermaterial in einer Sammelstelle gesammelt und zwischengelagert, bevor die Stickoxide aus dem Adsorbermaterial desorbiert werden.

In einer Ausführungsform erfolgt die Desorption der Stickoxide aus der Adsorbereinheit durch Erhitzen der Adsorbereinheit oder Durchleitung von heißem Wasserdampf, heißem Gas oder einem flüssigen Lösungsmittel, z.B. Wasser. Dadurch wird das adsorbierte NOₓ in die Dampf- oder Flüssigphase überführt.

In einer Ausführungsform erfolgt die Desorption der Stickoxide aus einem mit NOₓ beladenen Adsorbermaterial, das der Adsorptionseinheit entnommen wurde, durch Behandlung des Adsorbermaterials mit Hitze, heißem Dampf, heißem Gas oder einem flüssigen Lösungsmittel (z.B. Wasser). Das NOₓ geht in die Dampf- oder Flüssigphase über, das Adsorbermaterial bleibt unverändert. Eventuell muss das Adsorbermaterial getrocknet werden, bevor es erneut zur Stickoxidentfernung aus Abgasen eingesetzt werden kann. Bevorzugt beträgt die Temperatur sowohl bei der Desorption als auch bei der Trocknung maximal 200°C.

Das aus der Adsorbereinheit abgetrennte NOₓ wird einer weiteren Umsetzung zugeführt. Dabei reagieren die Stickoxide (NOₓ) zu flüssigen oder festen stickstoffhaltigen Verbindungen. Beispielsweise kann das NOₓ in die Produktionskette von Salpetersäure, Nitraten oder nichtwässrigen Lösungsmitteln auf NO₂-Basis eingebracht werden. In einer Ausführungsform umfassen die flüssigen oder festen stickstoffhaltigen Verbindungen Nitrate, insbesondere Ammoniumnitrat.

Das erfindungsgemäße Verfahren bietet eine Reihe von Vorteilen, insbesondere kann es einen Beitrag zur Verringerung von Umweltbelastung und Energieverbrauch leisten. Betrachtet man den Gesamtprozess, so wird Luftstickstoff durch die Umsetzung im Verbrennungsmotor zu NOₓ oxidiert, welches in einer Adsorbereinheit zwischengespeichert wird und nach Desorption zu flüssigen oder festen stickstoffhaltigen Verbindungen umgesetzt wird.

Die Stickoxide gelangen so nicht in die Atmosphäre. Durch den Einsatz des erfindungsgemäßen Verfahrens lassen sich die Stickoxidemissionen von Fahrzeugen mit Verbrennungsmotor signifikant reduzieren.

Das entstandene Reaktionsprodukt kann einer weiteren Verwendung zugeführt werden, beispielsweise als Dünger. Gleichzeitig wird NO₂, welches zur Herstellung des Produktes sonst hergestellt werden müsste, substituiert. Durch die Substitution von NO₂ in der Umsetzungsreaktion wird Energie eingespart.

Die in den Abgasen von Verbrennungsmotoren enthaltenen Stickoxide werden durch das erfindungsgemäße Verfahren industriell nutzbar gemacht, da sie nach der Desorption in konzentrierter Form zur Verfügung stehen und nicht mehr durch die anderen Abgasbestandteile verdünnt sind. Da in diversen industriellen Verfahren große Mengen an Stickoxiden verbraucht werden, lassen sich enorme Mengen der aus Abgasen gewonnenen Stickoxide weiterverarbeiten, d.h. der Stickstoff-Kreislauf kann quasi beliebig groß gestaltet werden.

Gegenstand der Erfindung ist auch ein System zur Verwertung von in einem Verbrennungsmotor gebildeten Stickoxiden. Das System umfasst eine Adsorbereinheit, die zur Adsorption von Stickoxiden aus einem Abgasstrom des Verbrennungsmotors eingerichtet ist, ein Desorptionsmodul, das dazu eingerichtet ist, in der Adsorbereinheit adsorbierte Stickoxide aus dieser zu desorbieren, und eine Reaktionseinheit, die dazu eingerichtet ist, die desorbierten Stickoxide zu flüssigen oder festen stickstoffhaltigen Verbindungen umzusetzen. Das System ist insbesondere zur Durchführung des erfindungsgemäßen Verfahrens geeignet.

Das System, umfasst eine Adsorbereinheit, die zur Adsorption von Stickoxiden (NOₓ) aus einem Abgasstrom des Verbrennungsmotors eingerichtet ist. In einer Ausführungsform ist die Adsorbereinheit im Abgasstrang des Verbrennungsmotors angeordnet, so dass beim Betrieb des Verbrennungsmotors ein Abgasstrom durch die Adsorbereinheit geleitet wird.

Erfindungsgemäß enthält die Adsorbereinheit ein Adsorbermaterial, welches dazu eingerichtet ist, Stickoxide (NOₓ) adsorptiv zu binden. Im Speziellen umfasst das Adsorbermaterial mindestens einen Zeolithen, beispielsweise ZSM-5, Zeolith Y oder Mordenit.

In einer Ausführungsform ist die Adsorbereinheit als Wechselkartusche ausgeführt. Dies hat zur Folge, dass sie ohne großen Aufwand und zerstörungsfrei aus ihrer Position im Abgasstrang des Verbrennungsmotors entfernt und gegen eine andere, gleichartige Kartusche ausgetauscht werden kann.

In einer weiteren Ausführungsform, bei der ein Adsorbermaterial in der Adsorbereinheit angeordnet ist, ist die Adsorbereinheit so ausgestaltet, dass ihr mit Stickoxiden (NOₓ) beladenes Adsorbermaterial zerstörungsfrei entnommen und durch unbeladenes Adsorbermaterial ersetzt werden kann. Beispielsweise kann die Adsorbereinheit als wiederverschließbarer Behälter ausgeführt sein, aus dem sich das Adsorbermaterial nach Öffnen des Behälters, z.B. durch Aufklappen, Aufschrauben, oder durch Öffnen eines Deckels oder einer Klappe, entnehmen bzw. entfernen lässt. Nach Einfüllen eines unbeladenen Adsorbermaterials kann die Adsorbereinheit wieder verschlossen und erneut in den Abgasstrom des Verbrennungsmotors eingebracht werden.

Das erfindungsgemäße System umfasst ein Desorptionsmodul, das dazu eingerichtet ist, in der Adsorbereinheit adsorbierte Stickoxide aus dieser zu desorbieren.

In einer Ausführungsform ist das Desorptionsmodul dazu eingerichtet, die Adsorbereinheit zu erhitzen oder ihr heißen Wasserdampf, heißes Gas oder ein flüssiges Lösungsmittel zuzuführen und dadurch Stickoxide aus der Adsorbereinheit zu desorbieren.

In einer anderen Ausführungsform ist das Desorptionsmodul dazu eingerichtet, mit Stickoxiden beladenes Adsorbermaterial zu erhitzen oder mit heißem Wasserdampf, heißem Gas oder einem flüssigen Lösungsmittel zu behandeln, und dadurch Stickoxide aus dem Adsorbermaterial zu desorbieren.

Das erfindungsgemäße System umfasst zudem eine Reaktionseinheit, die dafür eingerichtet ist, die desorbierten Stickoxide aus dem Desorptionsmodul zu flüssigen oder festen stickstoffhaltigen Verbindungen umzusetzen. Die Reaktionseinheit ist dafür eingerichtet, einen stickoxidhaltigen Eduktstrom aus dem Desorptionsmodul aufzunehmen und die Stickoxide mit weiteren Reaktanden umzusetzen. In einer Ausführungsform umfasst die Reaktionseinheit einen Reaktor zur Umsetzung von Stickoxiden zu Salpetersäure. In einer weiteren Ausführungsform umfasst die Reaktionseinheit einen Reaktor zur Umsetzung von Salpetersäure mit Ammoniak zu Ammoniumnitrat.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nachfolgend anhand eines Ausführungsbeispiels illustriert und wird unter Bezugnahme auf das Beispiel und die zugehörige Zeichnung weiter beschrieben. Es zeigt.

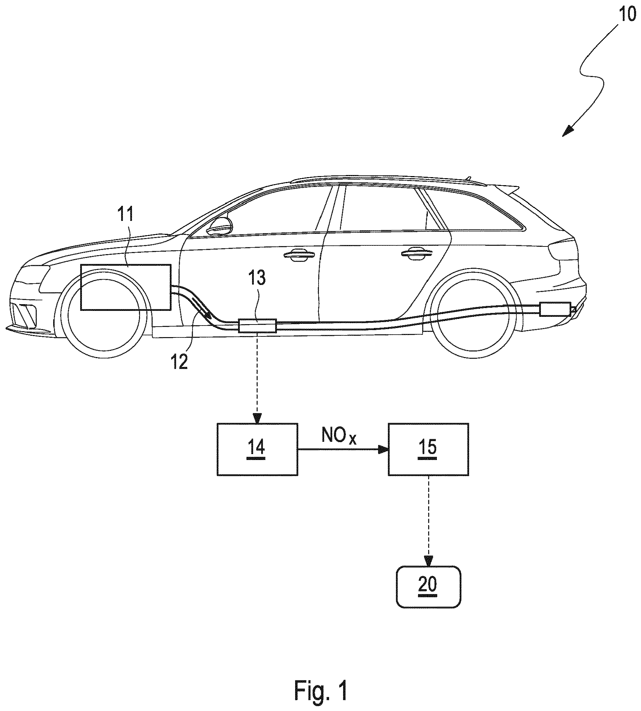

- Figur 1: eine schematische Darstellung einer Ausführungsform des erfindungsgemäßen Systems zur Verwertung von in einem Verbrennungsmotor gebildeten Stickoxiden.

Figur 1 zeigt schematisch eine Ausführungsform des erfindungsgemäßen Systems 10 zur Verwertung von in einem Verbrennungsmotor 11 gebildeten Stickoxiden.

In der dargestellten Ausführungsform ist der Verbrennungsmotor 11 in einem Fahrzeug angeordnet. Der Abgasstrom 12 des Verbrennungsmotors 11 strömt durch den Abgasstrang des Fahrzeugs. Im Abgasstrang ist eine Adsorbereinheit 13 angeordnet, beispielsweise eine ein Adsorbermaterial enthaltende Wechselkartusche, die zur Adsorption von Stickoxiden (NOx) aus dem Abgasstrom 12 eingerichtet ist. Während des Betriebs des Verbrennungsmotors 11 erfolgt eine Adsorption von NOₓ in der Adsorbereinheit 13 des Fahrzeugs. Während der Fahrt wird der Abgasstrom 12 durch die Adsorbereinheit 13 geleitet, die beispielsweise Adsorbermaterial enthält, welches NOₓ durch Adsorption binden kann. Die Adsorbereinheit 13 wird dadurch mit NOₓ beaufschlagt und kann bis zur Aufnahmegrenze der Adsorbereinheit NOₓ aufnehmen.

Ein Austausch der Adsorbereinheit 13 erfolgt spätestens nach Erreichen der Aufnahmegrenze, d.h. wenn das Adsorbermaterial vollständig mit NOₓ gesättigt ist. Entweder wird die Adsorbereinheit 13 als Ganzes getauscht oder es wird das Adsorbermaterial in der Adsorbereinheit 13 des Fahrzeugs gegen neues, nicht beladenes Material ausgetauscht. Die Adsorbereinheit 13 ist daher bevorzugt als Wechselkartusche ausgeführt oder erlaubt eine Entnahme des beladenen Adsorbermaterials und den Ersatz des beladenen Materials durch unbeladenes Adsorbermaterial ohne viel Montageaufwand und insbesondere, ohne dass die Adsorbereinheit 13 dabei zerstört wird.

Das mit NOₓ beladene Material kann in einer Sammelstelle gesammelt und zwischengelagert werden, um größere Mengen des beladenen Materials für den nächsten Schritt zur Verfügung zu haben und dadurch den Verwertungsprozess effizienter zu gestalten.

Die Adsorbereinheit 13 oder das darin enthaltene beladene Adsorbermaterial wird dann überführt in ein Desorptionsmodul 14. Im Desorptionsmodul 14 werden die in der Adsorbereinheit 13 adsorbierten Stickoxide desorbiert. In einer Variante wird das mit NOₓ beladene Adsorbermaterial entweder mit Hitze, heißem Dampf, heißem Gas oder einem flüssigen Lösungsmittel (z.B. Wasser) behandelt. Das NOₓ geht in die Dampf- oder Flüssigphase über, das Adsorbermaterial bleibt unverändert. Eventuell muss das Adsorbermaterial vor einer Wiederverwendung getrocknet werden. Es sollte bei der Desorption als auch bei der Trocknung mit moderaten Temperaturen von maximal 200°C gearbeitet werden. Das abgetrennte NOₓ wird einer Reaktionseinheit 15 zur weiteren Umsetzung zugeführt.

In der Reaktionseinheit 15 werden die desorbierten Stickoxide zu flüssigen oder festen stickstoffhaltigen Verbindungen 20 umgesetzt. Beispielsweise kann das NOₓ in die Produktionskette von Salpetersäure, Nitraten oder nichtwässrigen Lösungsmitteln auf NO₂-Basis eingebracht werden.

In einer Variante werden die Stickoxide NOₓ in der Reaktionseinheit 15 zunächst zu Salpetersäure HNO₃ umgesetzt. Die Salpetersäure wird anschließend mit Ammoniak NH₃ zu Ammoniumnitrat NH₄NO₃ umgesetzt, das beispielsweise als Stickstoffdünger Verwendung findet.

## Patentansprüche

1. Verfahren zur Verwertung von in einem Verbrennungsmotor (11) gebildeten Stickoxiden, umfassend die Adsorption von Stickoxiden (NOₓ) aus einem Abgasstrom (12) des Verbrennungsmotors in einer Adsorbereinheit (13), welche ein mindestens einen Zeolithen umfassendes Adsorbermaterial enthält, Entfernen der mit Stickoxiden (NOₓ) beladenen Adsorbereinheit (13) oder des Adsorbermaterials aus der Adsorbereinheit (13), Desorption von adsorbierten Stickoxiden (NOₓ) aus dem Adsorbermaterial, und Umsetzung der Stickoxide (NOₓ) zu flüssigen oder festen stickstoffhaltigen Verbindungen (20).

2. Verfahren nach Anspruch 1, bei dem die flüssigen oder festen stickstoffhaltigen Verbindungen (20) Nitrate umfassen.

3. Verfahren nach Anspruch 2, bei dem das Nitrat Ammoniumnitrat ist.

4. System (10) zur Verwertung von in einem Verbrennungsmotor (11) gebildeten Stickoxiden, umfassend eine ein mindestens einen Zeolithen umfassendes Adsorbermaterial enthaltende Adsorbereinheit (13), die zur Adsorption von Stickoxiden (NOₓ) aus einem Abgasstrom (12) des Verbrennungsmotors (11) eingerichtet ist, ein Desorptionsmodul (14), das dazu eingerichtet ist, in der Adsorbereinheit (13) adsorbierte Stickoxide (NOₓ) aus dieser zu desorbieren, und eine Reaktionseinheit (15), die dazu eingerichtet ist, die desorbierten Stickoxide (NOₓ) zu flüssigen oder festen stickstoffhaltigen Verbindungen (20) umzusetzen, wobei das Desorptionsmodul (14) und die Reaktionseinheit (15) nicht mit dem Verbrennungsmotor (11) verbunden sind und nicht mit dem Abgasstrom (12) in Kontakt kommen.

5. System (10) nach Anspruch 4, worin die Adsorbereinheit (13) als Wechselkartusche ausgeführt ist.

6. System (10) nach Anspruch 4 oder 5, worin die Adsorbereinheit (13) so ausgestaltet ist, dass ihr zerstörungsfrei mit Stickoxiden (NOₓ) beladenes Adsorbermaterial entnommen und durch unbeladenes Adsorbermaterial ersetzt werden kann.

7. System (10) nach Anspruch 6, worin die Adsorbereinheit (13) als wiederverschließbarer Behälter ausgestaltet ist, aus dem sich das Adsorbermaterial nach Öffnen des Behälters entnehmen lässt.

8. System (10) nach einem der Ansprüche 4 bis 7, worin das Desorptionsmodul (14) dafür eingerichtet ist, die Adsorbereinheit (13) zu erhitzen oder ihr heißen Wasserdampf, heißes Gas oder ein flüssiges Lösungsmittel zuzuführen und dadurch Stickoxide (NOₓ) aus der Adsorbereinheit (13) zu desorbieren; oder dafür eingerichtet ist, mit Stickoxiden (NOₓ) beladenes Adsorbermaterial zu erhitzen oder mit heißen Wasserdampf, heißem Gas oder einem flüssigen Lösungsmittel zu behandeln, und dadurch Stickoxide (NOₓ) aus dem Adsorbermaterial zu desorbieren.

9. System (10) nach einem der Ansprüche 4 bis 8, worin die Reaktionseinheit (15) einen Reaktor zur Umsetzung von Stickoxiden zu Salpetersäure umfasst.

10. System (10) nach Anspruch 9, worin die Reaktionseinheit (15) einen Reaktor zur Umsetzung von Salpetersäure mit Ammoniak zu Ammoniumnitrat umfasst.

## Claims

1. Method for recovery of nitrogen oxides formed in an internal combustion engine (11), comprising the adsorption of nitrogen oxides (NOₓ) from an exhaust gas stream (12) of the internal combustion engine in an adsorber unit (13), which contains an adsorber material comprising at least one zeolite, removing the adsorber unit (13) loaded with nitrogen oxides (NOₓ) or the adsorber material from the adsorber unit (13), desorption of adsorbed nitrogen oxides (NOₓ) from the adsorber material, and converting the nitrogen oxides (NOₓ) to liquid or solid nitrogenous compounds (20).

2. Method according to claim 1, in which the liquid or solid nitrogenous compounds (20) comprise nitrates.

3. Method according to claim 2, in which the nitrate is ammonium nitrate.

4. System (10) for recovery of nitrogen oxides formed in an internal combustion engine (11), comprising an adsorber unit (13) containing an adsorber material comprising at least one zeolite, which is configured to adsorb nitrogen oxides (NOₓ) from an exhaust gas stream (12) of the internal combustion engine (11), a desorption module (14) which is configured to desorb nitrogen oxides (NOₓ) adsorbed in the adsorber unit (13) from the adsorber unit, and a reaction unit (15) which is configured to convert the desorbed nitrogen oxides (NOₓ) into liquid or solid nitrogenous compounds (20), wherein the desorption module (14) and the reaction unit (15) are not connected to the internal combustion engine (11) and do not come into contact with the exhaust gas stream (12).

5. System (10) according to claim 4, wherein the adsorber unit (13) is designed as an exchangeable cartridge.

6. System (10) according to claim 4 or 5, wherein the adsorber unit (13) is designed such that adsorber material loaded with nitrogen oxides (NOₓ) can be removed therefrom without damage and replaced by unloaded adsorber material.

7. System (10) according to claim 6, wherein the adsorber unit (13) is designed as a reclosable container from which the adsorber material can be removed after opening the container.

8. System (10) according to any one of the claims 4 to 7, wherein the desorption module (14) is configured to heat the adsorber unit (13) or to supply it with hot steam, hot gas or a liquid solvent and thereby to desorb nitrogen oxides (NOₓ) from the adsorber unit (13); or is configured to heat adsorber material loaded with nitrogen oxides (NOₓ) or to treat this with hot water vapor, hot gas or a liquid solvent, and thereby to desorb nitrogen oxides (NOₓ) from the adsorber material.

9. System (10) according to any one of the claims 4 to 8, wherein the reaction unit (15) comprises a reactor for converting nitrogen oxides to nitric acid.

10. System (10) according to claim 9, wherein the reaction unit (15) comprises a reactor for converting nitric acid with ammonia into ammonium nitrate.

## Revendications

1. Procédé de valorisation d'oxydes d'azote formés dans un moteur à combustion interne (11) comprenant l'adsorption d'oxydes d'azote (Noₓ) à partir d'un courant de gaz d'échappement (12) du moteur à combustion interne dans une unité d'adsorbant (13) qui contient un matériau adsorbant comprenant au moins une zéolithe, le retrait de l'unité d'adsorbant (13) chargée d'oxydes d'azote (Noₓ) ou du matériau adsorbant de l'unité d'adsorbant (13), la désorption d'oxydes d'azote adsorbés (Noₓ) à partir du matériau adsorbant, et la conversion des oxydes d'azote (Noₓ) en composés contenant de l'azote liquides ou solides (20).

2. Procédé selon la revendication 1, dans lequel les composés contenant de l'azote liquides ou solides (20) comprennent des nitrates.

3. Procédé selon la revendication 2, dans lequel le nitrate est du nitrate d'ammonium.

4. Système (10) pour la valorisation d'oxydes d'azote formés dans un moteur à combustion interne (11) comprenant une unité d'adsorbant (13) contenant un matériau adsorbant comprenant au moins une zéolithe, qui est conçue pour l'adsorption d'oxydes d'azote (Noₓ) à partir d'un courant de gaz d'échappement (12) du moteur à combustion interne (11), un module de désorption (14) qui est conçu pour désorber des oxydes d'azote (Noₓ) adsorbés dans l'unité d'adsorbant (13) à partir de celle-ci, et une unité réactionnelle (15) qui est conçue pour convertir des oxydes d'azote(Noₓ) désorbés en composés contenant de l'azote liquides ou solides (20), dans lequel le module de désorption (14) et l'unité réactionnelle (15) ne sont pas liés au moteur à combustion interne (11) et n'entrent pas en contact avec le courant de gaz d'échappement (12).

5. Système (10) selon la revendication 4, dans lequel l'unité d'adsorbant (13) est réalisée comme une cartouche échangeable.

6. Système (10) selon la revendication 4 ou 5, dans lequel l'unité d'adsorbant (13) est équipée de telle sorte que son matériau adsorbant chargé d'oxydes d'azote (Noₓ) peut être retiré sans la détruire et peut être remplacée par un matériau adsorbant non chargé.

7. Système (10) selon la revendication 6, dans lequel l'unité d'adsorbant (13) est équipée comme un contenant pouvant être refermé, duquel le matériau adsorbant peut être retiré après ouverture du contenant.

8. Système (10) selon l'une quelconque des revendications 4 à 7, dans lequel le module de désorption (14) est conçu pour chauffer l'unité d'adsorbant (13) ou lui acheminer de la vapeur d'eau chaude, du gaz chaud ou un solvant liquide et ainsi, désorber des oxydes d'azote (Noₓ) à partir de l'unité d'adsorbant (13) ; ou est conçu pour chauffer du matériau absorbant chargé en oxydes d'azote (Noₓ) ou traiter avec de la vapeur d'eau chaude, du gaz chaud ou un solvant liquide, et ainsi désorber des oxydes d'azote (Noₓ) à partir du matériau adsorbant.

9. Système (10) selon l'une quelconque des revendications 4 à 8, dans lequel l'unité réactionnelle (15) comprend un réacteur pour la conversion d'oxydes d'azote en acide nitrique.

10. Système (10) selon la revendication 9, dans lequel l'unité réactionnelle (15) comprend un réacteur pour la conversion d'acide nitrique avec de l'ammoniaque en nitrate d'ammonium.
